# EUROPEAN PATENT SPECIFICATION

(11) **EP 3 098 472 B1**
(45) Date of publication and mention of the grant of the patent: **14.02.2018**
(21) Application number: 16170110.7
(22) Date of filing: 18.05.2016
(51) Int. Cl.: F16F 1/376, F16F 1/371, F16F 1/44, B61F 5/10, B61F 5/24, B60G 7/04, B60G 11/62, B60G 11/38

(54) **STOPPER FOR SUSPENSION SYSTEM**
STOPPER FÜR AUFHÄNGUNGSSYSTEM
BOUCHON POUR SYSTÈME DE SUSPENSION

(30) Priority: 27.05.2015 JP 2015106969
(43) Date of publication of application: 30.11.2016
(73) Proprietor: Toyo Tire&Rubber Co., Ltd., Itami-shi Hyogo 664-0847 (JP)
(72) Inventor: Honda, Eijiro, Osaka (JP); Fujimoto, Kenji, Osaka (JP)
(74) Representative: Fleuchaus, Michael A.

(56) References cited:
- EP-A1- 0 105 794
- EP-A1- 2 581 196
- EP-A1- 2 623 816
- CN-B- 101 975 236
- CN-U- 204 309 790
- JP-A- 2007 127 264
- JP-A- 2008 249 098
- JP-A- 2011 080 507
- US-A- 2 739 774
- US-A- 4 754 958

## Description

### BACKGROUNG OF THE INVENTION

### Field of the Invention

The present invention relates to a stopper for suspension systems suitable for railroad cars or road vehicles such as trucks and buses. More particularly, the invention relates to a stopper for suspension systems that includes an upper support part on a suspended side, a lower support part on an unsuspended side, and an elastic member connecting the upper support part and the lower support part to each other, the elastic member being formed with a cavity in a central area of a surface connecting to one of the upper support part and the lower support part, the cavity being recessed toward the other of the upper support part and the lower support part.

### Description of Related Art

A stopper for an air spring system disclosed in Japanese Patent Application Laid-open No. 2012-072825 is known as a stopper of this type (stopper for suspension systems). This air spring system is made up of an air spring that uses a diaphragm and an elastic member of a mass of rubber underneath. In an example of suitable use, it may be provided between a railroad car and a truck below the car.

In an air spring system, normally, the air spring mainly functions as a suspension, while the elastic member plays an auxiliary role. Nevertheless, in the event of a puncture of the diaphragm whereby the air spring is deflated, the elastic member alone has to provide suspension. For this reason, the elastic member needs to be imparted with the characteristics with which even the elastic member alone can withstand a large load for a while.

For example, there could be a situation as mentioned above where, should an operating train have an accidental puncture; the train still has to be operated at least for the day. In such a case, it needs to be so that, even though the air spring stops functioning and the suspension is provided only by the elastic member (i.e., even though the suspension malfunctions), it is hardly noticeable to the passengers and the comfort of ride has to be preserved as much as possible. Sometimes, the air spring may be intentionally deflated when the train is transferred from a station to a railroad yard after the operation.

The conventional stopper for suspension systems disclosed in Patent Literature 1 is imparted with such spring characteristics that it exhibits softness in the up and down direction in order to ensure a comfortable ride even if the air suspension is deflated due to a puncture. However, it is expected that, if a large load is applied such as when the train full of passengers runs on a curve, this stopper may collapse and fail to provide suspension.

### Prior Art Literature

### Patent Literature

Patent Literature 1: Japanese Patent Application Laid-open No. 2012-072825 Additionally, EP 2 581 196 A1, CN 204309790 U, JP 2011 080 507 A1 and JP 2007 127 264 A1 disclose relevant stoppers for suspension systems.

### SUMMARY OF THE INVENTION

An object of the present invention is to provide an improved stopper for suspension systems, so that a soft comfortable ride can be realized as well as a firm support can be provided to withstand an eventual large load.

Referring to the invention according to claim 1, a stopper for suspension systems includes: an upper support part 2B on a suspended side, a lower support part 4 on an unsuspended side, and an elastic member 5 connecting the upper support part 2B and the lower support part 4 to each other,
the elastic member 5 being formed with a cavity 12 in a central area of a surface connecting to one of the upper support part 2B and the lower support part 4, the cavity being recessed toward the other of the upper support part 2B and the lower support part 4, and is characterized in that
a rigid member G extending in a direction in which the upper support part 2B and the lower support part 4 are connected together is mounted inside the elastic member 5.

Referring to the invention according to claim 2, the stopper for suspension systems according to claim 1 is characterized in that
the rigid member G is disposed at a central position in the central area of the elastic member 5 in line with the cavity 12 in an up and down direction.

Referring to the invention according to claim 3, the stopper for suspension systems according to claim 2 is characterized in that
the rigid member G is positioned closer to an opposite side from the cavity 12 at the central position.

Referring to the invention according to claim 4, the stopper for suspension systems according to claim 2 is characterized in that
the rigid member G is positioned closer to the cavity 12 at the central position.

Referring to the invention according to claim 5, the stopper for suspension systems according to claim 1 is characterized in that
the rigid member G is formed in an annular shape having a larger diameter than that of the cavity 12.

Referring to the invention according to claim 6, the stopper for suspension systems according to claim 5 is characterized in that
the rigid member G is positioned at an equal height level as that of the cavity 12.

Referring to the invention according to claim 7, the stopper for suspension systems according to any one of claims 1 to 6 is characterized in that
the elastic member 5 is formed to have an outline in a generally convex barrel shape with a largest diameter in a middle part in a height direction thereof.

According to the invention as set forth in claims 1 to 7, with a rigid member mounted inside the elastic member, the displacement in the up and down direction can be controlled, so that nonlinear characteristics wherein the spring constant increases with the increase in the displacement can be achieved without difficulty. Namely, a suspension system that provides a soft ride with a relatively small spring constant in a low suspension stroke range, and that provides a firm support with a large spring constant when a large load is applied, can be realized.

As a result, an improved stopper for suspension systems can be provided, so that a soft comfortable ride can be realized as well as a firm support can be provided to withstand an eventual large load.

When the elastic member is made of rubber, having the rigid member inside helps shorten the time for vulcanization of the rubber that forms the elastic member and is favorable also in terms of productivity.

As in the invention according to claim 2, the rigid member may be disposed at a central position in the central area of the elastic member in line with the cavity in an up and down direction. The rigid member may be positioned closer to an opposite side from the cavity as in the invention according to claim 3, or positioned closer to the cavity as in the invention according to claim 4.

As in the invention according to claim 5, the rigid member may be formed in an annular shape having a larger diameter than that of the cavity, and this annular rigid member may be positioned at an equal height level as that of the cavity, as in the invention according to claim 6. Also, as in the invention according to claim 7, a stopper having an elastic member formed to have an outline in a generally convex barrel shape with a largest diameter in a middle part in a height direction thereof is also preferable.

### BRIEF DESCRIPTION OF THE DRAWINGS

Fig. 1 is a longitudinal cross-sectional view illustrating a stopper for suspension systems in a first embodiment;
Fig. 2 is a longitudinal cross-sectional view illustrating a deformed state of the stopper of Fig. 1 under a load;
Fig. 3 is a chart showing performance curves of the stopper of the first embodiment and a conventional stopper;
Figs. 4A and 4B are longitudinal cross-sectional views of a stopper according to a second embodiment, in which Fig. 4A illustrating a free state and Fig. 4B illustrating a loaded state;
Figs. 5A and 5B are longitudinal cross-sectional views of a stopper according to a third embodiment, in which Fig. 5A illustrating a free state and Fig. 5B illustrating a loaded state;
Figs. 6A and 6B are longitudinal cross-sectional views of a stopper according to a fourth embodiment, in which Fig. 6A illustrating a free state and Fig. 6B illustrating a loaded state;
Figs. 7A and 7B are longitudinal cross-sectional views of a stopper according to a prior art reference, in which Fig. 7A illustrating a free state and Fig. 7B illustrating a loaded state;
Fig. 8 is a chart showing performance curves of the stoppers of the second to fourth embodiments and the prior art reference;
Fig. 9 is a longitudinal cross-sectional view illustrating an example of a suspension system for railroad cars; and
Figs. 10A and 10B are longitudinal cross-sectional views of a conventional stopper, in which Fig. 10A illustrating a free state and Fig. 10B illustrating a loaded state.

### DETAILED DESCRIPTION OF PREFERRED EMBODIMENTS

Hereinafter, embodiments of a stopper for suspension systems according to the present invention in the form of a stopper for a suspension system with an air spring suitable for railroad cars will be described with reference to the drawings. In second to fourth embodiments and a prior art reference, the elements that are the same as those of a first embodiment are given the same reference numerals and will not be described.

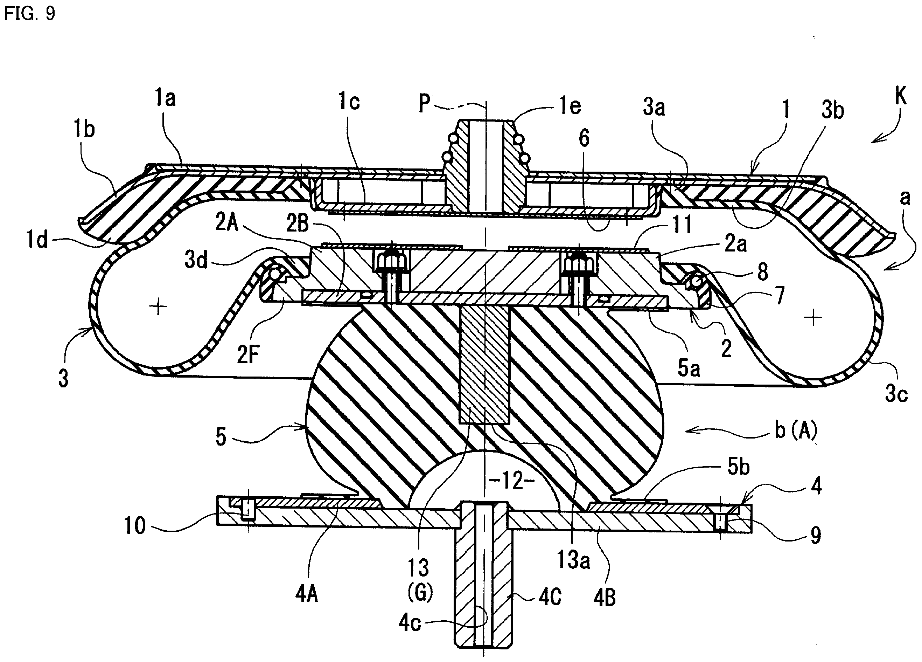

Fig. 9 shows a suspension system K for railroad cars (hereinafter simply referred to as "suspension"). This suspension K is made up of an air spring part a, which is formed by a rubber diaphragm 3 extending between an upper support plate 1 on the vehicle side and an intermediate support 2 disposed therebelow, and a stopper A, which is an elastic mechanism b formed via an elastic member 5 interposed between the intermediate support 2 and a lower support part 4 disposed therebelow on the truck side.

The upper support plate 1 is supported on a railroad car (not shown) via a cylindrical boss 1e in its center having a vertical axial center P, while the lower support part 4 is supported on the truck (not shown) via a cylindrical shaft 4C in its center having the axial center P.

The upper support plate 1 is formed in a disc-like shape and made up of an upper disc 1a, a lower disc 1b, a bottomed cylindrical portion 1c, an upper seat 1d, the cylindrical boss 1e, and so on. The upper disc 1a and lower disc 1b are both steel sheets having a circular shape when viewed from above or below and stacked upon one another, with the cylindrical boss 1e passing through them at the center. The bottomed cylindrical portion 1c is a bowl-shaped steel sheet fixedly attached to the lower face of the lower disc 1b, and the upper seat 1d is a ring-like rubber member integrally attached to the lower side of the lower disc 1b on the radially outer side of the bottomed cylindrical portion 1c.

The cylindrical boss 1e having the axial center P is secured so as to extend through the upper and lower discs 1a and 1b and the bottomed cylindrical portion 1c. The upper seat 1d is formed to be thin around the outer circumference of the bottomed cylindrical portion 1c and thick under and inside the lower disc 1b, with the thickness increasing downward radially outwards (to have a generally inverted bowl shape). A stainless steel annular plate 6 is integrally attached by bonding or the like to the lower face of the bottomed cylindrical portion 1c to be in contact with a slip plate.

The diaphragm 3 is formed to include an upper bead 3a press-fitted into an upper edge portion (in the form of a ring around the axial center P) formed by the lower disc 1b, bottomed cylindrical portion 1c, and upper seat 1d, an upper disc portion 3b received by the upper seat 1d in a wide area, a main body 3c that laterally extends most, and a lower bead 3d fitted to the intermediate support 2.

The lower bead 3d is press-fitted into a lower edge portion (in the form of a ring around the axial center P) formed by an outer circumferential surface 2a of a main disc 2A and an attachment ring 7 snugly fitted to the outer circumference of a flange part 2F. Namely, the diaphragm 3 is configured to have a structure known as a "self-sealing diaphragm" in which the diaphragm 3 is snugly fitted to both of the upper support plate 1 and intermediate support 2 without a fastening structure such as bolts, just like a tire and a wheel of a car.

The intermediate support 2 is configured to include the main disc 2A made of metal and having the outer circumferential surface 2a and flange part 2F, and an inner circumferential plate 2B made of metal and fastened to the lower face of the main disc 2A with bolts. The attachment ring 7 integrally attached to the outer circumference of the flange part 2F is a ring-like rubber member having a reinforcing ring 8 inside. An annular slip plate 11 made of a low-friction material such as fluorine resin is integrally attached to the upper face of the main disc 2A.

The lower support part 4 is formed by a placement disc 4A supporting the elastic member 5 that is integral therewith, a generally shallow plate-like support disc 4B receiving the placement disc 4A fitted therein, and the previously mentioned cylindrical shaft 4C fixedly attached to the support disc 4B. The placement disc 4A is fixed to the support disc 4B with the use of screws 9 and pins 10. The lower support part 4 is a circular member having the axial center P in its center.

The cylindrical shaft 4C has an insertion hole 4c extending through the shaft up and down, and a cavity 12 communicating with the insertion hole 4c is formed above the cylindrical shaft 4C and a central portion of the support disc 4B of the rubber mass 5.

The elastic member 5 is formed by a mass of rubber interposed between the lower support part 4 and the inner circumferential plate 2B such as to connect them to each other, bonded by cure adhesion to each of the lower support part 4, more particularly the placement disc 4A and the support disc 4B (one example of a lower support part), and the inner circumferential plate 2B (one example of an upper support part).

This rubber mass 5 increases in diameter downwards like a convex lens, but decreases in diameter from near the lower end toward the lower end, and increases in diameter again at the very lower end. The upper end is likewise enlarged.

In other words, the elastic member 5 takes on a generally convex barrel shape having a largest diameter at the middle in the height direction, somewhat lower than the midpoint between the upper and lower ends, or its outline is in an inverted hourglass shape.

The elastic member 5 also includes upper and lower annular thin portions 5a and 5b that cover the lower face of the inner circumferential plate 2B and the upper face of the placement disc 4A, respectively.

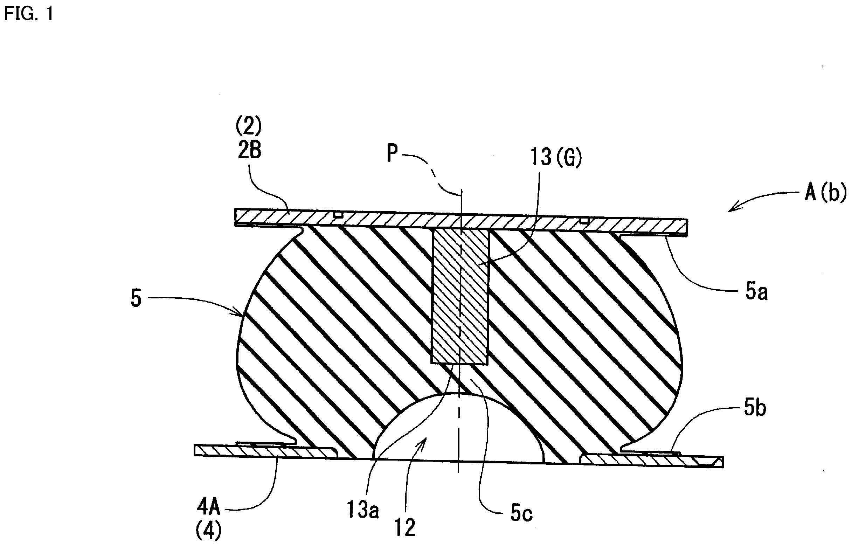

The stopper A is configured to include the cavity 12 in the central area of the surface of the elastic member 5 connecting to the lower support part 4 (one example of "one of the upper support part 2B and the lower support part 4"), the cavity being recessed toward the upper support part 2B (an example of "the other of the upper support part 2B and the lower support part 4") as shown in Fig. 1 and Fig. 9.

Inside the elastic member 5 is mounted a columnar rod 13 made of a hard material such as metal (an example of rigid member G) in the center around the axial center P (at a central position) in so close proximity to the upper support part 2B as to touch it. The columnar rod 13 is a solid bar having a circular cross section, and set so that its bottom surface 13a is positioned a little away from the top end of the cavity 12 thereabove.

Namely, the columnar rod 13 is disposed at a central position in the central area of the elastic member 5 in line with the cavity 12 in the up and down direction, and positioned closer to the opposite side from the cavity 12 (upper side) at the central position. In Fig. 1, the columnar rod 13 is in contact or integral with the upper support part 2B, and an elastic interposed portion 5c having a certain length in the up and down direction is formed between the columnar rod 13 thereabove and the cavity 12 therebelow.

The ratio of the diameter of the columnar rod 13 and the largest diameter of the elastic member 5 is 1:7.5 in the drawing but need not be so. Also, the vertical length of the columnar rod 13 and the vertical width of the elastic member 5 in the free state are drawn with a ratio of 1:1.7 but need not be so.

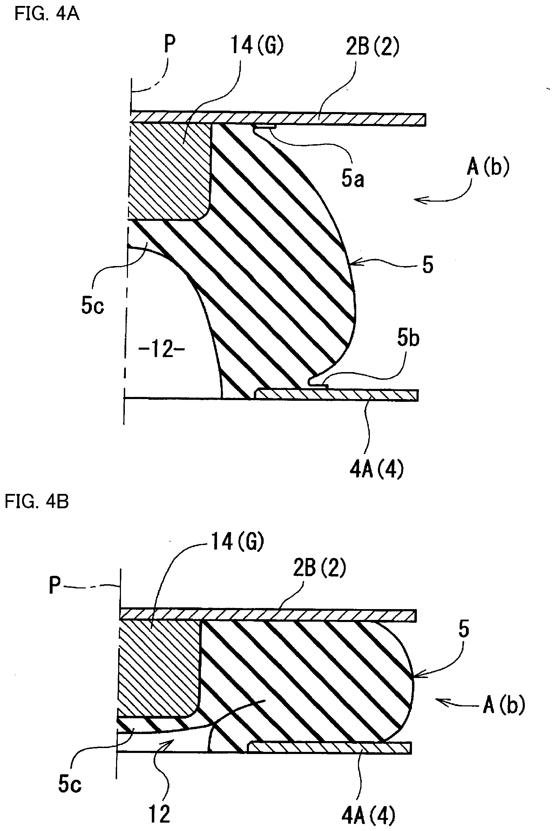

The shape of the cavity 12 may be semi-spherical as shown in Fig. 1, or hollowed more deeply than that as shown in Fig. 4A, or any other.

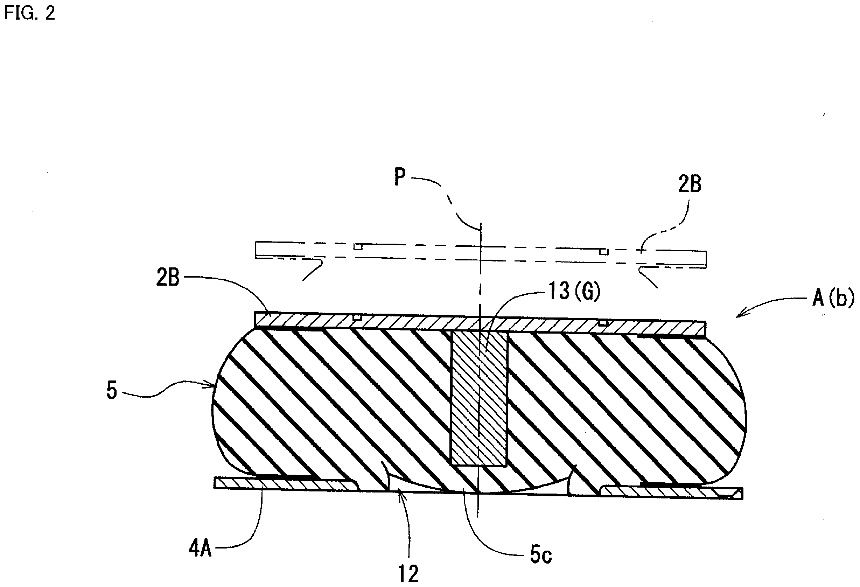

Fig. 2 shows the stopper A undergoing a large elastic deformation and compressed under a large downward load (of 100 kN, for example). After the deformation, the cavity 12 is substantially no longer there, but the columnar rod 13 directly above provides a support and thereby a favorable state is achieved in which the elastic member 5 is prevented from suffering an excessive compressive deformation.

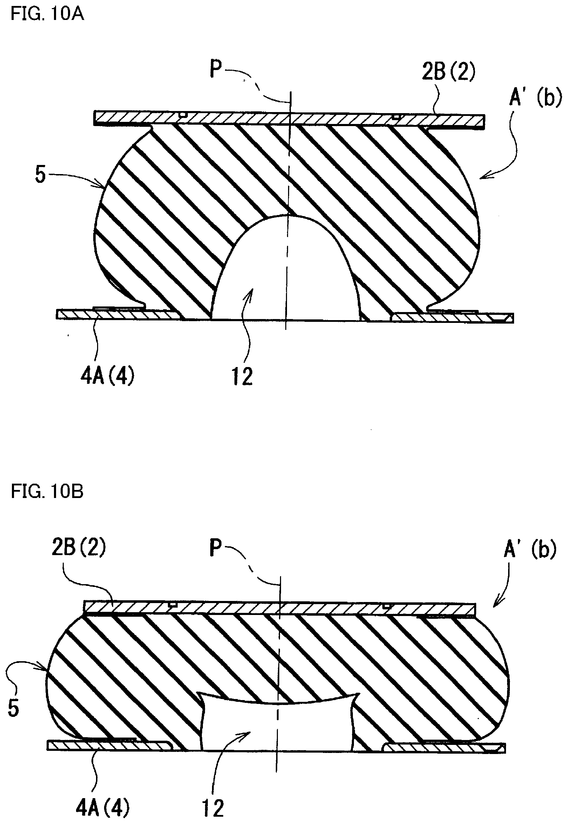

For comparison, Fig. 10A and Fig. 10B respectively show a stopper A' of a conventional structure without the rigid member G and a state thereof after the shape change due to compression. Parts of the stopper A' shown in Fig. 10 that are the same as those of the stopper A shown in Fig. 1 are given the same reference numerals and will not be described again.

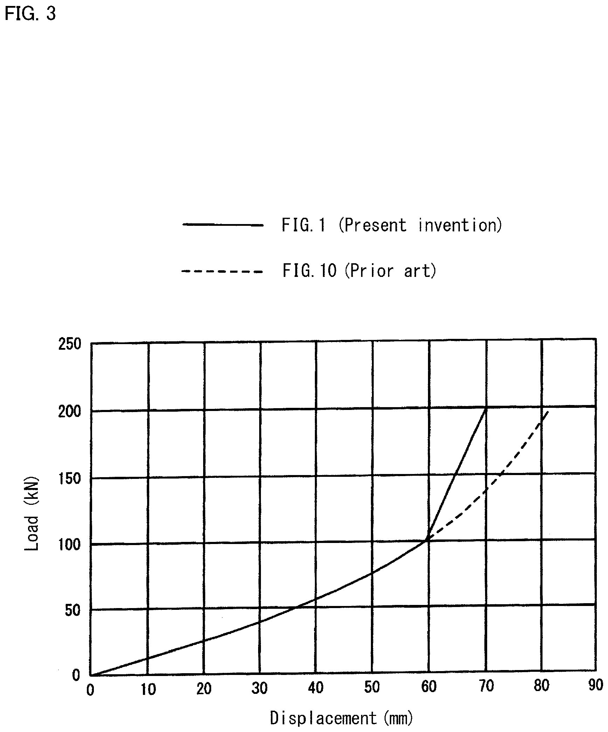

Fig. 3 shows a graph showing the correlation between the load and the displacement of the stopper A according to the present invention shown in Fig. 1 and Fig. 2 and the conventional stopper A' shown in Fig. 10A and Fig. 10B. Both stoppers A and A' undergo similar changes until the displacement reaches 60 mm. However, after the displacement exceeds 60 mm, the difference is clear enough: While the load continues to increase gradually for the conventional stopper A', the gradient of the increasing load of the stopper A of the present invention is increased whereby the load soars.

As can be seen from the correlation graph of Fig. 3, the stopper A of the present invention shown in Fig. 1 has nonlinear characteristics wherein the spring constant increases with the increase in the displacement (also referred to as progressive characteristics), with an inflection point at a certain displacement point (60 mm in Fig. 3) where the gradient suddenly increases, making the nonlinearity more intense.

Therefore, the stopper A made from the elastic member 5 alone can realize a suspension that provides a soft ride with a relatively small spring constant in a low suspension stroke range, and that provides a firm support with a large spring constant when a large load is applied.

Stoppers with an elastic member 5 made of a rubber mass such as the stopper A tend to have a smaller spring constant (tend to be soft) in the horizontal direction as compared to stoppers having a laminated rubber structure because they do not have an intermediate plate and are taller in most cases and therefore can move more in the horizontal direction.

Provision of the rigid member G inside the elastic member 5 can provide the following advantageous effects 1 to 4:
1. The presence of the rigid member G inside the elastic member 5 helps achieve nonlinear characteristics whereby the spring constant increases with the increase in the displacement, while the outer appearance is the same as the conventional stopper.
2. Even if the rigid member G is made of metal, it does not need anti-rust treatment since it is accommodated inside the elastic member 5.
3. The time required for vulcanization of the rubber that forms the elastic member 5 can be shortened because the volume of the rubber is reduced by the volume of the rigid member G.
4. With the structure in which the rigid member G is in contact (or integral) with the upper support part 2B or placement disc 4A (see Fig. 1, Figs. 4A and 4B, and Figs. 6A and 6B), the time required for vulcanization can be shortened because heat is efficiently conducted from the upper support part 2B or placement disc 4A during the vulcanization.

In the production of stoppers having an elastic member 5 made of a mass of rubber such as the stopper A' (see Figs. 10A and 10B), long hours needed for vulcanization because of the rubber mass structure would cause a bottleneck. The stopper A of the present invention that contains the rigid member G inside the elastic member 5 also offers an advantage of improved productivity by reducing the time for vulcanization due to the effects 3 and 4 described above.

### (Second Embodiment)

The stopper A according to the second embodiment has a large-diameter columnar rod 14 having a larger diameter than that of the columnar rod 13 shown in Fig. 1 mounted inside closer to the upper support part 2B, as shown in Figs. 4A and 4B. Fig. 4A and Fig. 4B respectively illustrate the stopper A in a free state and the stopper A when compressed. The large-diameter columnar rod 14 may also be a square columnar bar.

### (Third Embodiment)

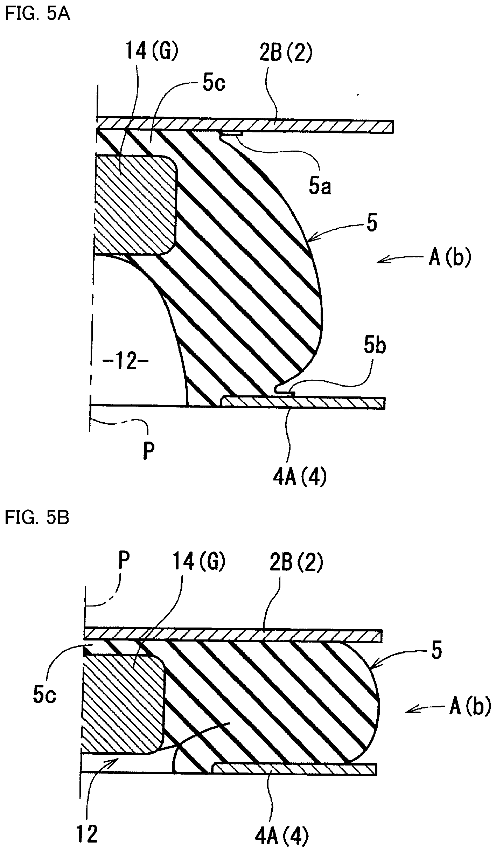

The stopper A according to the third embodiment has the large-diameter columnar rod 14 shown in Figs. 4A and 4B positioned closest possible to the cavity 12, as shown in Figs. 5A and 5B. Fig. 5A and Fig. 5B respectively illustrate the stopper A in a free state and the stopper A when compressed. The elastic interposed portion 5c in this structure is formed between the large-diameter columnar rod 14 therebelow and the upper support part 2B thereabove.

### (Fourth Embodiment)

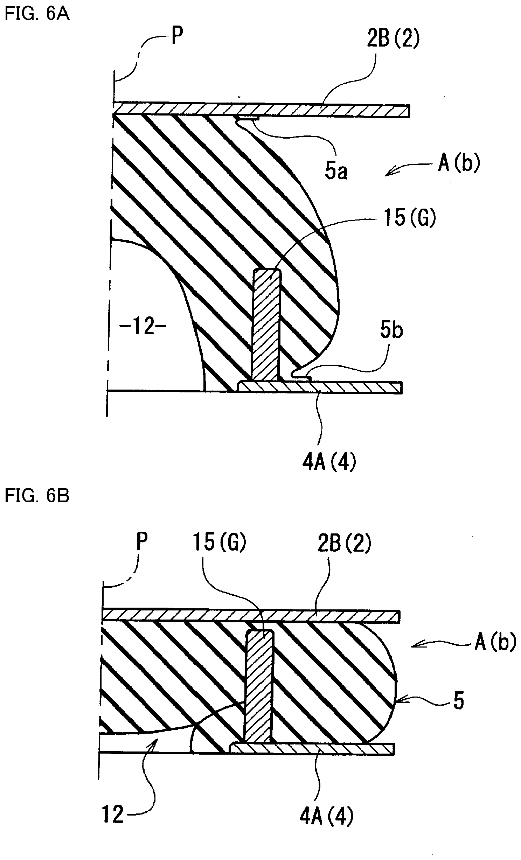

In the stopper A according to the fourth embodiment, as shown in Figs. 6A and 6B, the rigid member G is formed as an annular ring member 15 having a larger diameter than that of the cavity 12 and mounted to the lower part of the elastic member 5 around the axial center P so as to surround the cavity 12. The ring member 15 has a rectangular longitudinal cross section extending up and down, and is placed on the placement disc 4A to have about the same height as the cavity 12. Fig. 6A and Fig. 6B respectively illustrate the stopper A in a free state and the stopper A when compressed.

### (Prior art reference)

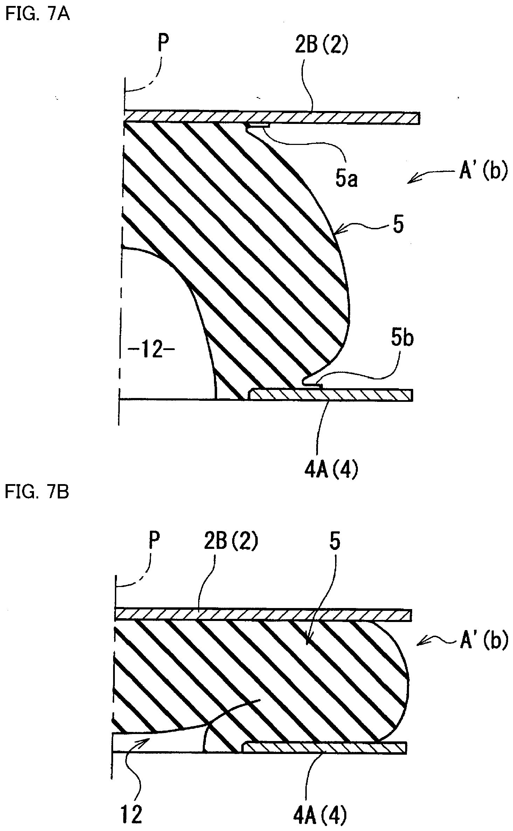

A conventional stopper A' without the rigid member G is shown as a prior art reference in Figs. 7A and 7B. While it is basically the same as the prior art shown in Figs. 10A and 10B, the stopper A' has a larger height. Figs. 7A and 7B respectively illustrate the stopper A' in a free state and the stopper A' when compressed. The compressive load being applied to the stopper A' of Figs. 7A and 7B is larger than the compressive load being applied to the stopper of Figs. 10A and 10B with a smaller height than the stopper of Figs. 7A and 7B.

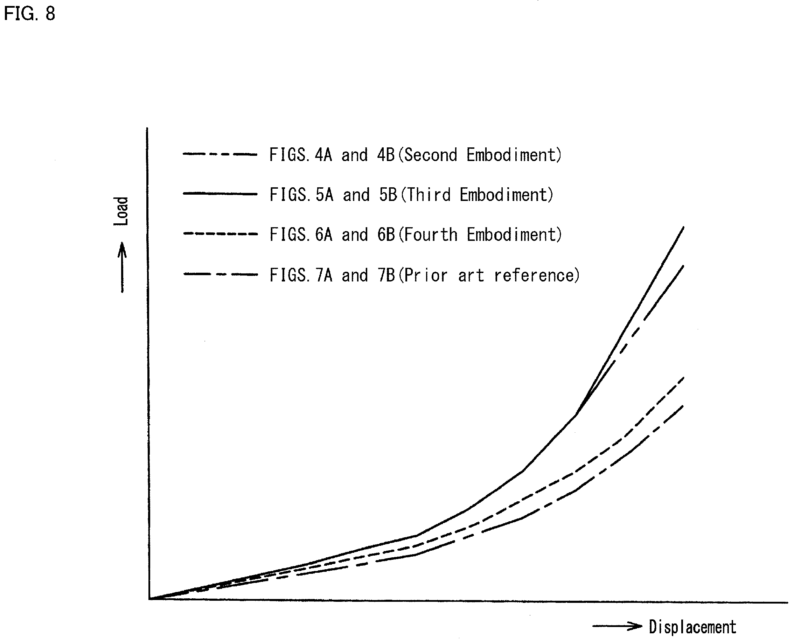

Fig. 8 is a graph showing the correlation between the displacement and the load of the second to fourth embodiments and the prior art reference. It can be seen from the graph of Fig. 8 that the nonlinear characteristics are more evident in this order: the third embodiment (Figs. 5A and 5B), the second embodiment (Figs. 4A and 4B), the fourth embodiment (Figs. 6A and 6B), and prior art reference (Figs. 7A and 7B). One can also see that the structures of the third and second embodiments (in which the rigid member G is disposed in the central area) are more effective than the structure of the fourth embodiment (in which the ring-like rigid member G is disposed so as to surround the cavity 12) in achieving the nonlinear characteristics.

As described above, the stopper A for suspension systems according to the present invention includes a rigid member G mounted inside the elastic member 5, whereby the displacement particularly in the up and down direction can be controlled, so that nonlinear characteristics wherein the spring constant increases with the increase in the displacement can be achieved without difficulty. Having the rigid member G inside also helps shorten the time for vulcanization of rubber that forms the elastic member 5 and is favorable in terms of productivity.

The rigid member G can be mounted inside the elastic member 5 on an upper part, a lower part, or both of them. Whether the rigid member G should be bonded to the elastic member 5 or not may be freely selected. Cure adhesion is also possible.

Various selection options are possible for the hard material of the rigid member G such as metal, non-iron metal such as aluminum alloy, and plastics.

## Claims

1. A stopper for suspension systems comprising:
a plate-like upper support part (2B) on a suspended side, a plate-like lower support part (4) on an unsuspended side, and an elastic member (5) taking on a convex barrel shape, which is interposed between the upper support part (2B) and the lower support part (4) so as to connect the upper support part (2B) and the lower support part (4) to each other,
the elastic member (5) being formed with a cavity (12) in a central area of a surface connecting to one of the upper support part (2B) and the lower support part (4), the cavity (12) being recessed toward the other of the upper support part (28) and the lower support part (4), wherein
a rigid member (G) extending in a direction in which the upper support part (2B) and the lower support part (4) are connected together is mounted inside the elastic member (5), as a member different from the uppersupport part (2B) and the lower support part (4), and
an elastic interposed portion (5c) is formed between the rigid member (G) and the upper support part (2B) or the lower support part (4).

2. The stopper for suspension systems according to claim 1, wherein the rigid member (G) is disposed at a central position in the central area of the elastic member (5) in line with the cavity (12) in an up and down direction.

3. The stopper for suspension systems according to claim 2, wherein the rigid member (G) is positioned closer to an opposite side from the cavity (12) at the central position,

4. The stopper for suspension systems according to claim 2, wherein the rigid member (G) is positioned closer to the cavity (12) at the central position.

5. The stopper for suspension systems according to claim 1, wherein the rigid member (G) is formed in an annular shape having a larger diameter than that of the cavity (12).

6. The stopper for suspension systems according to claim 5, wherein the rigid member (G) is positioned at an equal height level as that of the cavity (12).

7. The stopper for suspension systems according to any one of claims 1 to 6, wherein the elastic member (5) is formed to have an outline in a generally convex barrel shape with a largest diameter in a middle part in a height direction thereof.

## Patentansprüche

1. Stopper für Aufhängungssysteme, umfassend:
eine plattenartiges oberes Stützteil (2B) auf einer gefederten Seite, ein plattenartiges unteres Stützteil (4) auf einer ungefederten Seite und ein konvexe Trommelform annehmendes, elastisches Element (5), das zwischen dem oberen Stützteil (2B) und dem unteren Stützteil (4) angeordnet ist, so dass es das obere Stützteil (2B) und das untere Stützteil (4) miteinander verbindet,
wobei das elastische Element (5) mit einem Hohlraum (12) in einem zentralen Bereich einer Oberfläche gebildet ist, die entweder mit dem oberen Stützteil (2B) oder mit dem unteren Stützteil (4) verbunden ist, wobei der Hohlraum (12) in Richtung des anderen von oberem Stützteil (2B) und unterem Stützteil (4) ausgespart ist, wobei
ein steifes Element (G), das sich in einer Richtung erstreckt, in der das obere Stützteil (2B) und das untere Stützteil (4) miteinander verbunden sind, in dem elastischen Element (5) als ein Element montiert ist, das sich von dem oberen Stützteil (2B) und dem unteren Stützteil (4) unterscheidet, und
ein elastischer Zwischenabschnitt (5c) zwischen dem steifen Element (G) und dem oberen Stützteil (2B) oder dem unteren Stützteil (4) gebildet ist.

2. Stopper für Aufhängungssysteme gemäß Anspruch 1, bei dem das steife Element (G) an einer zentralen Position in dem zentralen Bereich des elastischen Elements (5) in Ausrichtung mit dem Hohlraum (12) in einer Aufwärts-Abwärts-Richtung angeordnet ist.

3. Stopper für Aufhängungssysteme gemäß Anspruch 2, bei dem das steife Element (G) näher an einer dem Hohlraum (12) gegenüberliegenden Seite an der zentralen Position positioniert ist.

4. Stopper für Aufhängungssysteme gemäß Anspruch 2, bei dem das steife Element (G) näher an dem Hohlraum (12) an der zentralen Position positioniert ist.

5. Stopper für Aufhängungssysteme gemäß Anspruch 1, bei dem das steife Element (G) in einer Ringform mit einem größeren Durchmesser als demjenigen des Hohlraums (12) gebildet ist.

6. Stopper fürAufhängungssysteme gemäß Anspruch 5, bei dem das steife Element (G) auf einem gleichen Höhenniveau wie demjenigen des Hohlraums (12) positioniert ist.

7. Stopper für Aufhängungssysteme gemäß einem der Ansprüche 1 bis 6, bei dem das elastische Element (5) mit einem Umriss in einer allgemein konvexen Trommelform mit einem größten Durchmesser in einem mittleren Teil in einer Höhenrichtung desselben gebildet ist.

## Revendications

1. Bouchon pour systèmes de suspension comprenant :
une partie de support supérieure en plaque (2B) sur un côté suspendu, une partie de support inférieure en plaque (4) sur un côté non suspendu, et un élément élastique (5) prenant sur une forme de tonneau convexe, qui est interposé entre la partie de support supérieure (2B) et la partie de support inférieure (4) afin de relier la partie de support supérieure (2B) et la partie de support inférieure (4) l'une à l'autre,
l'élément élastique (5) étant formé avec une cavité (12) dans une zone centrale d'une surface unissant une de la partie de support supérieure (2B) et de la partie de support inférieure (4), la cavité (12) étant encastrée vers l'autre de la partie de support supérieure (2B) et de la partie de support inférieure (4), dans lequel
un élément rigide (G) s'étendant dans une direction dans laquelle la partie de support supérieure (2B) et la partie de support inférieure (4) sont connectées ensemble est monté à l'intérieur de l'élément élastique (5), en tant qu'élément de la partie de support supérieure (2B) et de la partie de support inférieure (4), et
un élément interposé élastique (5c) est formé entre l'élément rigide (G) et la partie de support supérieure (2B) ou la partie de support inférieure (4).

2. Bouchon pour systèmes de suspension selon la revendication 1, dans lequel l'élément rigide (G) est disposé sur une position centrale dans la zone centrale de l'élément élastique (5) en concordance avec la cavité (12) dans une direction vers le haut et vers le bas.

3. Bouchon pour systèmes de suspension selon la revendication 2, dans lequel l'élément rigide (G) est positionné sur la position centrale plus près d'un côté opposé à partir de la cavité (12).

4. Bouchon pour systèmes de suspension selon la revendication 2, dans lequel l'élément rigide (G) est positionné sur la position centrale plus près de la cavité (12).

5. Bouchon pour systèmes de suspension selon la revendication 1, dans lequel l'élément rigide (G) est façonné dans une forme annulaire ayant un diamètre plus grand que celui de la cavité (12).

6. Bouchon pour systèmes de suspension selon la revendication 5, dans lequel l'élément rigide (G) est positionné à un niveau de hauteur égal à celui de la cavité (12).

7. Bouchon pour systèmes de suspension selon une quelconque des revendications 1 à 6, dans lequel l'élément élastique (5) est formé pour avoir une forme de tonneau généralement convexe avec un plus grand diamètre dans une partie centrale dans une direction de la hauteur de celui-ci.
